# EUROPEAN PATENT APPLICATION

(11) **EP 4 571 862 A1**
(43) Date of publication of application: **18.06.2025**
(21) Application number: 23216871.6
(22) Date of filing: 14.12.2023
(51) Int. Cl.: H01M 4/04, H01M 10/04

(54) **METHOD OF MANUFACTURING AN ELECTRODE FOIL**

(71) Applicant: CUSTOMCELLS Holding GmbH, 25524 Itzehoe (DE)
(72) Inventor: Kuhn, Peter, Itzehoe (DE)
(74) Representative: LKGLOBAL Lorenz & Kopf Patentanwalt Attorney at Law PartG mbB

(57) **Abstract**

The invention relates to a method of manufacturing an electrode foil. The method comprises conveying a substrate foil in a conveying direction, and continuous coating the substrate foil with a coating material in at least one central electrode coating portion and a first peripheral coating portion of the substrate foil, wherein a thickness of the coated first peripheral coating portion is similar to or larger than a thickness of the coated central electrode coating portion, and wherein a width of the central electrode coating portion is larger than a width of the first peripheral coating portion. The method further comprises applying a pressure to the central electrode coating portion and the first peripheral coating portion, and removing the first peripheral coating portion at least partially.

## Description

### FIELD OF THE DISCLOSURE

The present disclosure relates to methods of manufacturing an electrode foil for an energy storage device. The present disclosure further relates to an apparatus for manufacturing an electrode foil for an energy storage device.

### BACKGROUND OF THE DISCLOSURE

Energy storage devices, particularly batteries, play a critical role in modern society, powering a wide range of devices from portable electronics to electric vehicles. The increasing demand for portable electronics and in particular electric vehicles has led to a growing need for batteries with higher energy density, longer lifespan, and improved safety. Furthermore, the shift towards renewable energy sources such as solar and wind power has increased the need for energy storage systems, making batteries an essential technology in the transition to a low-carbon economy.

In order to satisfy this growing need for batteries, there is a need to improve battery manufacturing technologies and processes. Electrodes are one of the key components of a battery cell and their manufacturing typically comprises at least one roll-to-roll manufacturing process. Such a manufacturing process may include a step of coating a substrate foil with a coating material, particularly with a slurry, an optional subsequent step of drying the coated slurry on the substrate foil and another subsequent step of applying a pressure on the coated substrate foil in order to adjust the thickness of the coated substrate foil. The thickness distribution of the coated substrate foil does have a critical effect on both further subsequent manufacturing steps as well as the performance of a battery cell comprising electrodes manufactured from the coated substrate foil.

A challenge during the manufacturing of electrode foils is to avoid wrinkles in the coated substrate foil after the step of applying a pressure on the coated substrate foil. When a pressure is applied to a coated substrate foil, particularly by calendaring the coated substrate foil, a coated portion of the substrate foil gets compacted and thus the substrate foil in the coating portion is stretched by the applied pressure. Uncoated portions of the substrate foil, do not experience the same amount of pressure, mostly no pressure at all, during calendaring and thus do not get stretched. Unevenly stretching the substrate foil in this way can create tensions within the substrate foil material which can lead to wrinkles in the coated substrate foil. These wrinkles can lead to the substrate foil not being usable for further manufacturing steps in the electrode manufacturing.

CN104143628B describes a method for rolling an electrode material and a rolling equipment, which can easily adjust the extension of an uncoated portion of the electrode material by setting a non-coated area extension mechanism, and can suppress wrinkles on the electrode material. However, this method simply calendars the non-coated area, and high pressure is applied due to the difficulty of calendaring, but the extension of the foil is limited, and the residual stress of the foil after calendaring is large, which is not conducive to eliminating wrinkles.

CN208000966U describes a lithium battery pole piece hot rolling device. The feed port and discharge port of the roller press are equipped with lithium battery pole piece hot rolling devices. The lithium battery pole piece hot rolling device uses an electrically heated hot steel roller group. This solution increases the contact area of the pole piece and the hot steel roll during heating to improve the heating effect during hot pressing to improve the performance of the pole piece. However, this kind of hot rolling solution for the whole pole piece can greatly reduce the rolling force and improve the wrinkles, but due to the lack of special treatment for the non-coated area, the improvement of wrinkles is limited.

CN212708163U describes a lithium battery pole piece rolling device. The lithium battery pole piece rolling device comprises a non-film-coated area magnetic induction heating mechanism, a non-film-coated area calendaring mechanism, a preheating roller, a hot roller and a non-film-coated area stretching mechanism which are sequentially arranged between an unwinding mechanism and a winding mechanism, wherein the non-film-coating area magnetic induction heating mechanism is used for rapidly heating a non-film-coating area foil of a pole piece through electromagnetic induction. The non-film-coating area calendaring mechanism is used for rolling the heated non-film-coating area foil of the pole piece. The preheating roller is used for preheating a coating area and a non-coating area of the pole piece, the hot roller is used for carrying out hot rolling on the film coating area and the non-film coating area of the preheated pole piece, and the non-film-coating area stretching mechanism is used for stretching the non-film-coating area foil of the pole piece after hot rolling, so that the film coating area and the non-film-coating area are consistent in extension, and the wrinkles of the pole piece are eliminated. However, this kind of solution requires extensive additional heating equipment in order to preheat and heat the electrode foils. Further, the effect of eliminating wrinkles strongly depends on the material of both the substrate foil as well as the coating material due to their different heating behavior.

### SUMMARY OF THE DISCLOSURE

Currently, it remains desirable to overcome the aforementioned problems and in particular to provide a method of manufacturing an electrode foil, wherein wrinkles in the electrode foil are avoided.

Therefore, the present disclosure relates to a method of manufacturing an electrode foil. The method comprises conveying a substrate foil in a conveying direction, and continuous coating the substrate foil with a coating material in at least one central electrode coating portion and a first peripheral coating portion of the substrate foil, wherein a thickness of the coated first peripheral coating portion is similar to or larger than a thickness of the coated central electrode coating portion, and wherein a width of the central electrode coating portion is larger than a width of the first peripheral coating portion. The method further comprises applying a pressure to the central electrode coating portion and the first peripheral coating portion, and removing the first peripheral coating portion at least partially.

By providing such a method, wrinkles in the electrode foil, particularly after calendaring the electrode foil, can be reduced or completely avoided without the necessity to provide additional heating devices as explained in the following description in more detail. In this way, the electrode manufacturing, particularly the calendaring step, becomes more reliable and the scrap rate can be reduced.

When a pressure is applied to the coated substrate foil, particularly by calendaring the coated substrate foil, the coated portion of the substrate foil gets compacted and thus the substrate foil in the coating portion is stretched by the applied pressure. By having a coated first peripheral coating portion additionally to the coated electrode coating portion, both coated portions experience the same amount of pressure during calendaring. In this way, the coated substrate foil gets stretched by the same amount in both, the electrode coating portion and the first peripheral coating portion, effectively avoiding tensions within the substrate foil material and thus reducing wrinkles in the substrate foil.

The substrate foil may comprise a conductive material, particularly a metal such as copper and/or aluminum and/or any alloy comprising conductive material such as copper and/or aluminum. The substrate foil may be a copper foil and/or an aluminum foil and/or an alloy foil comprising copper and/or aluminum.

The term "foil" may denote a sheet of material that can be wound and unwound. The term "foil" may denote any kind of material sheets or other thin structures like a thin film or a thin layer or a layer assembly. The term "foil" may denote foils having any thickness and shape. The term "foil" may denote, for example, foils having a round or a rectangular shape
The substrate foil may comprise a length extension, a width extension and a thickness extension, wherein the thickness extension is significantly smaller than the length extension and the width extension. The width extension is significantly smaller than the length extension. The length extension of the substrate foil is the extension of the substrate foil in the conveying direction. The width extension of the substrate foil is the extension of the substrate foil in a width direction. The thickness extension of the substrate foil is the extension of the substrate foil in a thickness direction. The substrate foil may comprise a first coating surface in a plane spanned by the width extension and the length extension of the substrate foil. The width direction is perpendicular to the conveying direction. The thickness direction is perpendicular to the conveying direction and the width direction. Thus, the conveying direction, the width direction and the thickness direction form an orthogonal coordinate system.

The electrode foil may comprise the substrate foil and coating material. In other words, the electrode foil may be the coated substrate foil. The electrode foil may be used to provide anodes and/or cathodes for battery cells.

The coating material may be a slurry, particularly a slurry used for battery cell production. The coating material may comprise an active material such as graphite, lithium-nickel-manganese-cobalt-oxide or any other active material suitable for battery cell manufacturing. The coating material may comprise a conductive carbon material such as carbon black, a solvent material such as deionized water and/or n-methyl-2-pyrrolidone and a binder material such as carboxymethyl-cellulose and/or poly-vinylidene fluoride. The coating material may comprise an additive material such as styrene-butadiene-rubber. The coating material may be used for anode manufacturing and/or cathode manufacturing of a battery cell.

Continuous coating the substrate foil may comprise coating the substrate foil with a coating material, particularly with a slurry, using a coating device, particularly a slot die. Particularly, the substrate foil may be continuously coated in the central electrode coating portion and the first peripheral coating portion with coating material using one single coating device, particularly one single slot die.

During normal operation of continuous coating, coating material is applied without interruptions in the conveying direction as opposed to intermittent coating, where discrete coating portions in the conveying directions are formed by intermittently interrupting the coating process.

The coating device, particularly the slot die, may comprise one or more separation brackets arranged in the coating nozzle to form separate coating sections of the coating nozzle. For instance, the coating device may comprise two separation brackets arranged in the coating nozzle and configured to form a central coating section for coating coating material to the central electrode coating portion and two peripheral coating sections for coating coating material to the first peripheral coating portion and a second peripheral coating portion.

The central electrode coating portion may be used in subsequent electrode manufacturing steps to form part of an active area of an electrode of a battery cell. The central electrode portion may be arranged on the first coating surface of the substrate foil, particularly in the center of the substrate foil in width direction.

The first peripheral coating portion may be part of electrode tabs for the central electrode coating portion.

The thickness of the coated first peripheral coating portion and the thickness of the coated electrode coating portion is an extension of the coating portions in the thickness direction.

The amount of pressure applied to the central electrode coating portion and to the first peripheral coating portion may be substantially the same amount of pressure.

The first peripheral coating portion may be arranged adjacent to the central electrode coating portion such that the central electrode coating portion is separated from the first peripheral coating portion by a first peripheral uncoated portion of the substrate foil.

Removing the first peripheral coating portion may comprise cutting the coated substrate foil, particularly cutting the coated substrate foil adjacent to the first peripheral coating portion and/or adjacent to the central electrode coating portion.

The first peripheral coating portion may be removed from the electrode foil, particularly completely removed from the electrode foil. Particularly, the first peripheral coating portion may be removed from the electrode foil, such that the first peripheral uncoated portion between the electrode coating portion and the first peripheral portion remains a part of the electrode foil after the first peripheral coating portion has been removed. The remaining first peripheral uncoated portion of the substrate foil may serve to provide tabs for the coated electrode portion.

Removing the first peripheral coating portion at least partially may comprise removal of the first peripheral coating portion, such that a first plurality of peripheral strips is formed at the electrode foil, wherein the peripheral strips are spaced apart from each other in the conveying direction, such that a first clearance is formed between two peripheral strips. The peripheral strips may extend away from the coated central electrode coating portion in width direction. The peripheral strips may comprise part of the coated first peripheral coating portion. The peripheral strips may serve to provide tabs for the coated central electrode portion. In this way, a tab area may be adjusted, particularly increased, according to the requirements of the battery cells for which the electrode foil should be used. Thus, flexibility of the usage of the electrode foil can be increased.

The method may further comprise continuous coating the substrate foil with a coating material in a second peripheral coating portion of the substrate foil, wherein a thickness of the coated second peripheral coating portion is similar to or larger than the thickness of the coated central electrode coating portion, and wherein the width of the central electrode coating portion is larger than a width of the second peripheral coating portion. The method may further comprise applying a pressure to the second peripheral coating portion, and removing the second peripheral coating portion at least partially.

Such a method comprises the advantage that the coated substrate foil gets stretched symmetrically by the same amount in the electrode coating portion, the first peripheral coating portion and the second peripheral coating portion, effectively avoiding tensions within the substrate foil material and thus reducing wrinkles in the substrate foil even further.

The second peripheral coating portion may be arranged adjacent to the central electrode coating portion such that the central electrode coating portion is separated from the second peripheral coating portion by a second peripheral uncoated portion of the substrate foil.

The second peripheral coating portion may be arranged symmetrically to the first peripheral coating portion such that the central electrode coating portion is arranged centered between the first and second peripheral coating portion. In this way, the coated substrate foil can be calendared with more symmetrically resulting in a more symmetrically stretched foil. Further, such a coated substrate foil will not be dragged into one direction in width direction during calendaring.

The second peripheral coating portion may be removed from the electrode foil, particularly completely removed from the electrode foil. Particularly, the second peripheral coating portion may be removed from the electrode foil, such that the second peripheral uncoated portion between the electrode coating portion and the second peripheral portion remains a part of the electrode foil after the second peripheral coating portion has been removed. The remaining second peripheral uncoated portion may serve to provide tabs for the coated electrode portion.

Removing the second peripheral coating portion at least partially may comprise removal of the second peripheral coating portion, such that a second plurality of peripheral strips is formed at the electrode foil, wherein the peripheral strips are spaced apart from each other in the conveying direction, such that a second clearances is formed between two peripheral strips. The peripheral strips may extend away from the coated central electrode coating portion of the substrate foil in width direction. The peripheral strips may comprise part of the coated second peripheral coating portion. The peripheral strips may serve to provide tabs for the coated electrode portion. In this way, a tab area may be adjusted, particularly increased, according to the requirements of the battery cells for which the electrode foil should be used. Thus, flexibility of the usage of the electrode foil can be increased.

The first plurality of peripheral strips and the second plurality of peripheral strips may be formed at opposite edge portions of the coated substrate foil, such that the coated central electrode portion is arranged between the first plurality of peripheral strips and the second plurality of peripheral strips. The first plurality of peripheral strips and the second plurality of peripheral strips may be formed alternately in the conveying direction. That is, a peripheral strip of the first plurality of peripheral strips may be arranged at one edge portion of the coated substrate foil at a first position in the length extension of the substrate foil. At the opposite edge portion at the first position in the length extension of the substrate foil, a second clearance may be arranged between two peripheral strips of the second plurality of peripheral strips.

The method may further comprise continuous coating the substrate foil with a coating material in a third peripheral coating portion of the substrate foil, wherein a thickness of the coated third peripheral coating portion is similar to or larger than the thickness of the coated central electrode coating portion, wherein the width of the central electrode coating portion is larger than a width of the third coating portion, and wherein the third peripheral coating portion is arranged adjacent to the first peripheral coating portion, such that the first peripheral coating portion is arranged between the central electrode coating portion and the third peripheral coating portion. The method may further comprise applying a pressure to the third peripheral coating portion, and removing the third peripheral coating portion at least partially.

The third peripheral coating portion is separated from the first peripheral coating portion by a third peripheral uncoated portion of the substrate foil.

Removing the third peripheral coating portion at least partially may comprise removal of the third peripheral coating portion in the conveying direction, such that the first plurality of peripheral strips is formed at the electrode foil. The peripheral strips thus may comprise part of the first peripheral coating portion and part of the third peripheral coating portion.

Such a method comprises the advantage that, the length of the tabs may be adjusted, particularly increased even further, according to the requirements of the battery cells for which the electrode foil should be used. Thus, flexibility of the usage of the electrode foil can be increased even further.

The method may further comprise continuous coating the substrate foil with a coating material in a fourth peripheral coating portion of the substrate foil, wherein a thickness of the coated fourth peripheral coating portion is similar to or larger than the thickness of the coated central electrode coating portion, wherein the width of the central electrode coating portion is larger than a width of the fourth coating portion, and wherein the fourth peripheral coating portion is arranged adjacent to the second peripheral coating portion, such that the second peripheral coating portion is arranged between the central electrode coating portion and the fourth peripheral coating portion. The method may further comprise applying a pressure to the fourth peripheral coating portion, and removing the fourth peripheral coating portion at least partially.

The fourth peripheral coating portion is separated from the second peripheral coating portion by a fourth peripheral uncoated portion of the substrate foil.

Removing the fourth peripheral coating portion at least partially may comprise removal of the fourth peripheral coating portion in the conveying direction, such that the second plurality of peripheral strips is formed at the electrode foil. The peripheral strips thus may comprise part of the second peripheral coating portion and part of the fourth peripheral coating portion.

Such a method comprises the advantage that, the length of the tabs may be adjusted, particularly increased even further, according to the requirements of the battery cells for which the electrode foil should be used. Thus, flexibility of the usage of the electrode foil can be increased even further.

The method may further comprise continuous coating the substrate foil with a coating material in a fifth and/or sixth peripheral coating portion of the substrate foil, wherein a thickness of the coated fifth and/or sixth peripheral coating portion is similar to or larger than the thickness of the coated central electrode coating portion, wherein the width of the central electrode coating portion is larger than a width of the fifth and/or sixth coating portion, wherein the fifth peripheral coating portion is arranged adjacent to the third peripheral coating portion, such that the third peripheral coating portion is arranged between the first peripheral coating portion and the fifth peripheral coating portion, wherein the sixth peripheral coating portion is arranged adjacent to the fourth peripheral coating portion, such that the fourth peripheral coating portion is arranged between the second peripheral coating portion and the sixth peripheral coating portion. The method may further comprise applying a pressure to the fifth and/or sixth peripheral coating portion, and removing the fifth and/or sixth peripheral coating portion at least partially.

The fifth peripheral coating portion is separated from the third peripheral coating portion by a fifth peripheral uncoated portion of the substrate foil.

The sixth peripheral coating portion is separated from the fourth peripheral coating portion by a sixth peripheral uncoated portion of the substrate foil.

The first peripheral uncoated portion, the second peripheral uncoated portion, the third peripheral uncoated portion and/or the fourth peripheral uncoated portion may have substantially the same width.

The first peripheral coating portion, the second peripheral coating portion, the third peripheral coating portion, the fourth peripheral coating portion, the fifth peripheral coating portion and/or the sixth peripheral coating portion may have substantially the same width.

The substrate foil may be continuously coated in the central electrode coating portion, the first peripheral coating portion, the second peripheral coating, the third peripheral coating portion, the fourth peripheral coating portion, the fifth peripheral coating portion and the sixth peripheral coating portion with coating material using one single coating device, particularly one single slot die.

After coating the substrate foil with a coating material and before applying a pressure, the method may comprise heating and/or drying the coated substrate foil.

Heating and/or drying the coated substrate foil may comprise heating the coated substrate foil using infrared radiation, heating the coated substrate foil using induction and/or drying the coated substrate foil using convection, particularly in a convection oven.

Heating and/or drying the coated substrate foil and applying a pressure to the coated substrate foil may be substantially at the same time, particularly using a heatable pressure application device such as temperature-controlled calendar rolls.

Applying a pressure may comprise calendaring the coated substrate foil.

The central electrode coating portion and the first, second and/or third peripheral coating portion may be arranged at a first coating surface of the substrate foil.

The fourth, fifth and/or sixth peripheral coating portion may be arranged at the first coating surface of the substrate foil.

Such a method comprises the advantage that the substrate foil may be continuously coated with coating material using one single coating device, particularly one single slot die. In this way, the substrate foil may be coated faster, particularly within one continuous coating step.

The central electrode coating portion and the first peripheral coating portion may be distanced from each other in a width direction, wherein a distance between the central electrode coating portion and the first peripheral coating portion may be smaller than or equal to 5 mm, more in particular 2 mm. Alternatively, the distance between the electrode coating portion and the first peripheral coating portion may be greater than or equal to 5 mm, particularly greater than or equal to 10 mm, more preferably greater than or equal to 15 mm.

Such a method comprises the advantage that the substrate material is stretched in a more uniform way. The smaller the distance between the central electrode coating portion and the first peripheral coating portion, the better the uniform stretching of the substrate foil material. Thus, tensions within the substrate foil material can be avoided even better resulting in even further reduced wrinkles in the coated substrate foil.

The central electrode coating portion and the first peripheral coating portion may be distanced from each other in width direction by the first peripheral uncoated portion of the substrate foil.

The width of the first peripheral coating portion may be smaller than or equal to 3 cm, particularly smaller than or equal to 1 cm, more preferably smaller than or equal to 5 mm. The width of the first peripheral coating portion may be smaller than or equal to 3 cm and greater than or equal to 5 mm. The width may be theoretically of any size, however, in order to reduce the amount of spent coating material, a smaller width may be desirable.

Such a method comprises the advantage that the amount of coating material required for the first peripheral coating portion is reduced, thus reducing overall production cost of such an electrode foil.

The central electrode coating portion and the first peripheral coating portion may be coated with the same coating material.

Such a method comprises the advantage the same coating device, particularly the same slot die, may be used, reducing process complexity. Coating the substrate foil with the same coating material in all coating portion substantially reduces process parameter complexity and thus increases reliability of the coating process.

The first peripheral coating portion and the second peripheral coating portion may be arranged adjacent to the central electrode coating portion, such that the central electrode coating portion is arranged between the first peripheral coating portion and the second peripheral coating portion.

Such a method comprises the advantage that the coated substrate foil is stretched symmetrically and more uniform when pressure is applied to the coating portions. In this way, tensions within the substrate foil can be reduced, resulting in a reduction of wrinkles of the coated substrate foil.

The first, second and/or third peripheral coating portion may form a first, second and/or third sacrificial coating strip.

A sacrificial coating strip is not used in further manufacturing steps of the electrode foil. Sacrificial coating strips may be recycled after they have been removed from the electrode foil.

After removing the first peripheral coating portion at least partially, the method may further comprise further processing the coated substrate foil, wherein the further processing may comprise at least one of slitting the coated substrate foil being a parent substrate foil into narrower child substrate foils, and/or winding the coated substrate foil to a coil, particularly winding the child substrate foils into child coils, and/or drying, particularly vacuum drying, the coated substrate foil, particularly the child substrate foil, and/or separating the coated substrate foil into electrode sheets, and/or stacking the electrode sheets, and/or welding electrode tabs, and/or packaging electrodes into cell housings, and/or filling electrolytes into cell housings.

The further processing may further comprise battery cell finishing steps, such as pretreating the cells in a climate chamber, initial charging and discharging the cells according to one or more precisely defined current and voltage profiles, degassing cells, particularly pouch cells and/or prismatic cells, and/or applying different temperature profiles to the cells over a period of time while measuring an open cell voltage of the battery cells.

Before continuous coating the substrate foil with coating material, the method may further comprise manufacturing the coating material, particularly mixing the coating material.

A distance between the first peripheral coating portion and an outer edge of the substrate foil in a width direction may be smaller than or equal to 5 mm, in particular 2 mm. Alternatively, the distance between the first peripheral coating portion and the outer edge of the substrate foil in the width direction may be greater than or equal to 5 mm, particularly greater than or equal to 10 mm, more preferably greater than or equal to 15 mm.

The present disclosure further relates to a method of manufacturing an electrode foil. The method comprises conveying a substrate foil in a conveying direction, and continuous coating the substrate foil with a coating material in at least one central electrode coating portion and a first peripheral coating portion of the substrate foil, wherein a thickness of the coated first peripheral coating portion is similar to or larger than a thickness of the coated central electrode coating portion. The method further comprises removing an uncoated edge portion of the substrate foil adjacent to the first peripheral coating portion, wherein a width of the central electrode coating portion is similar to a width of the first peripheral coating portion, after the uncoated edge portion has been removed. The method further comprises applying a pressure to the central electrode coating portion and the first peripheral coating portion, wherein the central electrode coating portion and the first peripheral coating portion are separated by a first uncoated portion of the substrate foil, and wherein the first uncoated portion serves for providing tabs for both the first peripheral coating portion and the central electrode coating portion.

By providing such a method, wrinkles and other failures in the electrode foil, particularly after calendaring the electrode foil, can be reduced or completely avoided without the necessity to provide additional heating devices. Further, an electrode foil comprising two electrode coating portions, wherein each electrode coating portion serves to provide part of an active area of an electrode used in battery cells can be manufactured within one continuous coating step. In this way, the electrode manufacturing, particularly the calendaring step, becomes more reliable and the scrap rate can be reduced.

The above described features and advantages with regard to the method described above also apply analogously to this method.

Removing an uncoated edge portion of the substrate foil adjacent to the first peripheral coating portion may be such that the remaining first peripheral coating portion forms an edge of the electrode foil.

The method may further comprise removing an uncoated edge portion of the substrate foil adjacent to the central electrode coating portion, particularly such that the remaining central electrode coating portion forms the edge of the electrode foil.

The first uncoated portion of the substrate foil may be arranged substantially in the center of the substrate foil in width direction.

Providing tabs for both the first peripheral coating portion and the central electrode coating portion may comprise alternately cutting the first uncoated portion, such that uncoated strips for both the central electrode coating portion and the first peripheral coating portion are formed. The uncoated strips may extend from the central electrode coating portion and from the first peripheral coating portion in width direction. The uncoated strips may be formed alternating between the central electrode coating portion and the first peripheral coating portion in the conveying direction. That is, an uncoated strip for the central electrode portion may be followed by an uncoated strip for the first peripheral coating portion, which may subsequently be followed by an uncoated strip for the central electrode coating portion in the conveying direction.

Cutting the first uncoated portion may comprise laser cutting and/or shear cutting the first uncoated portion.

The present disclosure further relates to an apparatus for manufacturing an electrode foil, comprising a conveyor system for conveying a substrate foil in a conveying direction, a coating device for coating coating material on the substrate foil in at least one central electrode coating portion and in at least one first peripheral coating portion of the substrate foil, a pressure application device for applying pressure to the coated substrate foil, and a cutting device for removing the peripheral coating portion of the substrate foil at least partially.

Such an apparatus comprises the advantage that wrinkles in the electrode foil, particularly after calendaring the electrode foil, can be reduced or completely avoided without the necessity to provide additional heating devices. In this way, the electrode manufacturing, particularly the calendaring step, becomes more reliable and the scrap rate can be reduced.

The cutting device may be one or more rolling knives and/or one or more shear cutting devices and/or one or more laser cutting devices.

The coating device may be a slot die, particularly a slot die, comprising one or more separation brackets arranged in the coating nozzle to form separate coating sections of the coating nozzle. For instance, the coating device may comprise two separation brackets arranged in the coating nozzle and configured to form a central coating section for coating coating material to the central electrode coating portion and a first peripheral coating section for coating coating material to the first peripheral coating portion and a second peripheral coating section for coating coating material to the second peripheral coating portion. The slot die may comprise a plurality of coating brackets arranged in the coating nozzle to form a plurality of separate coating sections.

The pressure application device may comprise one or more, particularly two, calendar rolls. The calendar rolls may be heatable calendar rolls.

The apparatus may comprise a winding device for winding the coated substrate foil to a coil. The apparatus may comprise a drying device, particularly a vacuum drying device such as a vacuum oven, for drying the coated substrate foil. Alternatively, the drying device may be a convection drying device such as a convection oven or an infrared drying device. More preferably, the drying device may be a combined drying device comprising a convection oven and an infrared drying device. The apparatus may comprise a slitting device, particularly one or more rolling knives, for slitting the coated substrate being a parent substrate foil into narrower child substrate foils.

The apparatus may comprise a separation unit for separating the coated substrate foil into electrode sheets. The separation unit may comprise a notching device for preforming the coated substrate foil into electrode sheets and a laser cutting device for separating the coated substrate foil, particularly the preformed coated substrate foil, into electrode sheets. Alternatively, or additionally, the apparatus may comprise a tab cutting device for cutting the tabs of the coated substrate foil.

The apparatus may further comprise a stacking unit for stacking the electrode sheets into a cell stack. The stacking unit may comprise one or more robotic arms. Alternatively, or additionally the stacking unit may comprise a z-folding device for stacking the electrodes into a cell stack.

The apparatus may comprise a welding unit for welding electrode tabs. The electrode tabs of the electrode sheets may be welded to an anode and/or a cathode current collector tab. The welding unit may comprise an ultrasonic welding device and/or a laser welding device.

The apparatus may comprise a packaging device for packaging the electrodes into cell housings and a filling device for filling electrolytes into cell housings.

### BRIEF DESCRIPTION OF THE DRAWINGS

Fig. 1 shows a flowchart of a method of manufacturing an electrode foil according to a first example of the disclosure.
Fig. 2 shows an apparatus for manufacturing an electrode foil according to a second example of the disclosure in a schematic side view.
Fig. 3 shows a part of an apparatus for manufacturing an electrode foil according to a third example of the disclosure in a schematic top view.
Fig. 4 shows a part of an apparatus for manufacturing an electrode foil according to a fourth example of the disclosure in a schematic top view.
Fig. 5 shows a flowchart of a method of manufacturing an electrode foil according to a fifth example of the disclosure.
Fig. 6 shows an apparatus for manufacturing an electrode foil according to a sixth example of the disclosure in a schematic side view.
Fig. 7 shows a part of the apparatus for manufacturing an electrode foil according to the sixth example of the disclosure in a schematic top view.

### DESCRIPTION OF THE DRAWINGS

Reference will now be made in detail to examples of the disclosure, examples of which are illustrated in the accompanying drawings. Wherever possible, the same reference numerals will be used throughout the drawings to refer to the same or like parts. Thus, a description of a part given in relation to one drawing also applies to other drawings, avoiding a repetitive description. Furthermore, individual features described in connection with one example can also be used separately in other examples.

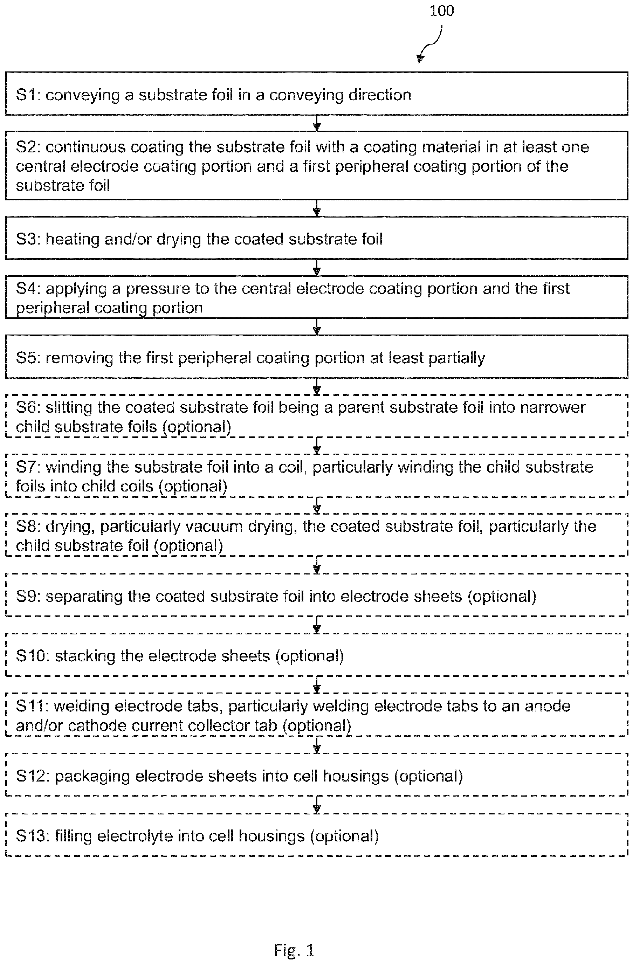

Fig. 1 shows a flowchart of a method 100 of manufacturing an electrode foil according to a first example of the disclosure. The method 100 comprises a step S1 of conveying a substrate foil in a conveying direction and a step S2 of continuous coating the substrate foil with a coating material in at least one central electrode coating portion and a first peripheral coating portion of the substrate foil.

After continuous coating the substrate foil, the method further comprises an optional step S3 of heating and/or drying the coated substrate foil.

The method further comprises a step S4 of applying a pressure to the central electrode coating portion and the first peripheral coating portion and a step S5 of removing the first peripheral coating portion at least partially.

The method further comprises an optional step S6 of slitting the coated substrate foil being a parent substrate foil into narrower child substrate foils and a step S7 of winding the substrate foil into a coil, particularly winding the child substrate foils into child coils.

The method further comprises an optional step S8 of drying, particularly vacuum drying, the coils, particularly the child coils.

The method further comprises an optional step S9 of separating the coated substrate foil into electrode sheets and an optional step S10 of stacking the electrode sheets. The method further comprises an optional step S11 of welding electrode tabs, particularly welding electrode tabs of the electrode sheets to an anode and/or cathode current collector tab.

The method further comprises an optional step S12 of packaging electrode sheets into cell housings and an optional step S13 of filling electrolyte into cell housings.

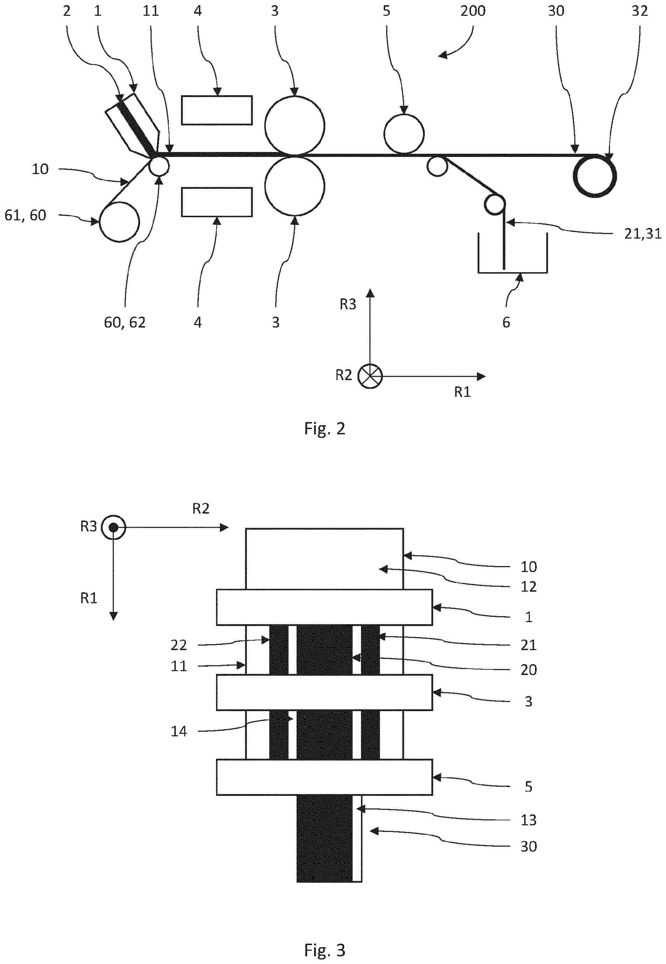

Fig. 2 shows an apparatus 200 for manufacturing an electrode foil 30 according to a second example of the disclosure in a schematic side view. The second example may be based on or correspond to the first example.

The apparatus 200 comprises a first roller 61 and a second roller 62 forming a conveyor system 60 for conveying a substrate foil 10 in a conveying direction R1. The apparatus 200 further comprises a coating device 1 for coating coating material 2 on the substrate foil 10 in at least one central electrode coating portion 20 and at least one first peripheral coating portion 21 of the substrate foil 10. The apparatus further comprises a pressure application device 3 for applying pressure to the coated substrate foil 10 and a cutting device 5 for removing the first peripheral coating portion 21 of the substrate foil 10 at least partially. The pressure application device 3 is a calendaring device comprising two calendaring rollers. The pressure application device 3 is arranged after the coating device 1 in the conveying direction R1. The cutting device 5 is a rolling knife and arranged after the pressure application device 3 in the conveying direction R1. The apparatus 200 further comprises a drying device 4 arranged between the coating device 1 and the pressure application device 3 in the conveying direction R1. The drying device 4 is a convection oven.

After removing the first peripheral coating portion 21, the first peripheral coating portion 21 is conveyed separately from the remaining electrode foil 30 into a collecting device 6. The collecting device 6 may be a bin or a metal container. The collected first peripheral coating portion 21 may be recycled or processed in another way, other than in electrode foil manufacturing. Thus, the first peripheral electrode portion 21 forms a first sacrificial coating strip 31.

After removing the first peripheral coating portion 21, the remaining electrode foil 30 is winded into an electrode coil 32.

Fig. 3 shows a part of an apparatus 200 for manufacturing an electrode foil 30 according to a third example of the disclosure in a schematic top view. The third example may be based on or correspond to the first and/or second example. Particularly, Fig. 3 shows the substrate foil 10 being conveyed in conveying direction R1 through the coating device 1, the pressure application device 3 and the cutting device 5 of the apparatus 200 in a schematic top view.

The coating device 1 is formed as a slot die, wherein the slot die comprises two coating brackets arranged in the coating nozzle of the slot die. The coating brackets form a central electrode coating section for coating coating material 2 in a central electrode coating portion 20 of the substrate foil 10. The brackets further form a first peripheral coating section for coating coating material 2 in a first peripheral coating portion 21 of the substrate foil 20 and a second peripheral coating section for coating coating material 2 in a second peripheral coating portion 22 of the substrate foil 10.

The substrate foil 10, being conveyed in the conveying direction R1 is coated with coating material 2 in a central coating portion 20, a first peripheral coating portion 21 and a second peripheral coating portion 22 by the coating device 1.

The first peripheral coating portion 21 and the second peripheral coating portion 22 are arranged adjacent to the central electrode coating portion 20, such that the central electrode coating portion 20 is arranged between the first peripheral coating portion 21 and the second peripheral coating portion 22, essentially in the center of the substrate foil 10 in a width direction R2.

The central electrode coating portion 20 and the first peripheral coating portion 21 are distanced from each other in width direction R2, such that the central electrode coating portion 20 is separated from the first peripheral coating portion 21 by a first peripheral uncoated portion 13 of the substrate foil 10.

The central electrode coating portion 20 and the second peripheral coating portion 22 are distanced from each other in width direction R2, such that the central electrode coating portion 20 is separated from the second peripheral coating portion 22 by a second peripheral uncoated portion 14 of the substrate foil 10.

A width of the central electrode coating portion 20 is larger than a width of the first peripheral coating portion 21 and a width of the second peripheral coating portion 22. The width of the first peripheral coating portion 21 and the width of the second peripheral coating portion 22 are substantially the same.

The central electrode coating portion 20, the first peripheral coating portion 21 and the second peripheral coating portion 22 are arranged at a first coating surface 12 of the substrate foil 10.

After coating the substrate foil 10, a pressure is applied to the central electrode coating portion 20, the first peripheral coating portion 21 and the second peripheral coating portion 22 by the pressure application device 3.

After applying a pressure to the coated substrate foil 11, the first peripheral coating portion 21 is completely removed such that the first peripheral uncoated portion 13 between the electrode coating portion 20 and the first peripheral portion 21 remains a part of the electrode foil 30 after the first peripheral coating portion 21 has been removed. The remaining first peripheral uncoated portion 13 of the substrate foil serves to provide tabs for the coated electrode portion 20.

The second peripheral coating portion 22 is completely removed such that the electrode coating portion 20 forms an edge portion of the electrode foil 30.

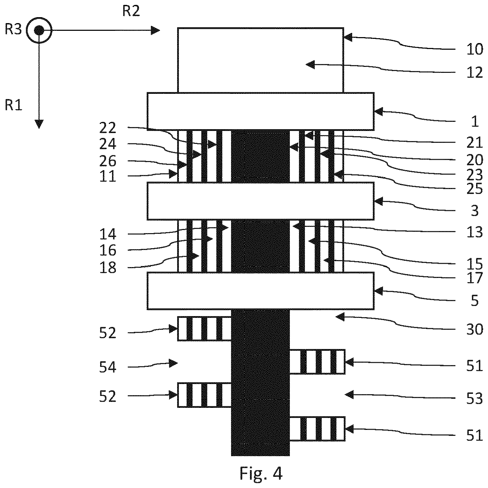

Fig. 4 shows a part of an apparatus 200 for manufacturing an electrode foil 30 according to a fourth example of the disclosure in a schematic top view. The fourth example may be based on or correspond to the first and/or second example. Particularly, Fig. 4 shows the substrate foil 10 being conveyed through the coating device 1, the pressure application device 3 and the cutting device 5 of the apparatus 200 according to the fourth example of the disclosure in a schematic top view.

The coating device 1 being a slot die comprises six coating brackets arranged in the coating nozzle of the slot die. The coating brackets form a central electrode coating section for coating coating material 2 in a central electrode coating portion 20 of the substrate foil 10. The brackets further form a first peripheral coating section, a second peripheral coating section, a third peripheral coating section, a fourth peripheral coating section, a fifth peripheral coating section and a sixth peripheral coating section for coating coating material 2 in the first, the second, the third, the fourth, the fifth and the sixth peripheral coating portion 21, 22, 23, 24, 25, 26 of the substrate foil 10 respectively.

The substrate foil 10, being conveyed in the conveying direction R1 is coated with coating material 2 in a central coating portion 20, the first peripheral coating portion 21, the second peripheral coating portion 22, the third peripheral coating portion 23, the fourth peripheral coating portion 24, the fifth peripheral coating portion 25 and the sixth peripheral coating portion 26 by the coating device 1.

The first peripheral coating portion 21 and the second peripheral coating portion 22 are arranged adjacent to the central electrode coating portion 20, such that the central electrode coating portion 20 is arranged between the first peripheral coating portion 21 and the second peripheral coating portion 22, essentially in the center of the substrate foil 10 in width direction R2. The third peripheral coating portion 23 is arranged adjacent to the first peripheral coating portion 21, such that the first peripheral coating portion 21 is arranged between the central electrode coating portion 20 and the third peripheral coating portion 23. The fourth peripheral coating portion 24 is arranged adjacent to the second peripheral coating portion 22, such that the second peripheral coating portion 22 is arranged between the central electrode coating portion 20 and the fourth peripheral coating portion 24. The fifth peripheral coating portion 25 is arranged adjacent to the third peripheral coating portion 23, such that the third peripheral coating portion 23 is arranged between the first peripheral coating portion 21 and the fifth peripheral coating portion 25. The sixth peripheral coating portion 26 is arranged adjacent to the fourth peripheral coating portion 24, such that the fourth peripheral coating portion 24 is arranged between the second peripheral coating portion 22 and the sixth peripheral coating portion 26.

The first peripheral coating portion 21 and the third peripheral coating portion 23 are distanced from each other in width direction R2, such that the first peripheral coating portion 21 is separated from the third peripheral coating portion 23 by a third peripheral uncoated portion 15 of the substrate foil 10. The third peripheral coating portion 23 and the fifth peripheral coating portion 25 are distanced from each other in width direction R2, such that the third peripheral coating portion 23 is separated from the fifth peripheral coating portion 25 by a fifth peripheral uncoated portion 17 of the substrate foil 10.

The second peripheral coating portion 22 and the fourth peripheral coating portion 24 are distanced from each other in width direction R2, such that the second peripheral coating portion 22 is separated from the fourth peripheral coating portion 24 by a second peripheral uncoated portion 14 of the substrate foil 10. The fourth peripheral coating portion 24 and the sixth peripheral coating portion 26 are distanced from each other in width direction R2, such that the fourth peripheral coating portion 24 is separated from the sixth peripheral coating portion 26 by a sixth peripheral uncoated portion 18 of the substrate foil 10.

The width of the central electrode coating portion 20 is larger than a width of the third, the fourth, the fifth and the sixth peripheral coating portion 23, 24, 25, 26. The width of the peripheral coating portions 21, 22, 23, 24, 25, 26 are substantially the same.

The peripheral coating portions 21, 22, 23, 24, 25, 26 and the central electrode coating portion 20 are arranged at the first coating surface 12 of the substrate foil 10.

After coating the substrate foil 10, a pressure is applied to the central electrode coating portion 20, the peripheral coating portions 21, 22, 23, 24, 25, 26 by the pressure application device 3.

After applying a pressure to the coated substrate foil 11, the peripheral coating portions 21, 22, 23, 24, 25, 26 are removed partially. The coating portions 21, 22, 23, 24, 25, 26 are partially removed, such that a first plurality of peripheral strips 51 and a second plurality of peripheral strips 52 are formed at the electrode foil 30, wherein the peripheral strips 51 are spaced apart from each other in the conveying direction R1, such that a first clearance 53 is formed, and wherein the peripheral strips 52 are spaced apart from each other in the conveying direction R1, such that a second clearance 54 is formed. The peripheral strips 51, 52 serve to provide tabs for the coated electrode portion 20 of the electrode foil 30. The peripheral strips 51 comprise part of the first, the third and the fifth peripheral coating portion 21, 23, 25 and peripheral strips 52 comprise part of the second, the fourth and the sixth peripheral coating portion 22, 24, 26.

The peripheral strips 51 and the peripheral strips 52 are formed at opposite edge portions of the coated substrate foil 11, such that the coated central electrode portion 20 is arranged between the first plurality of peripheral strips 51 and the second plurality of peripheral strips 52. The first plurality of peripheral strips 51 and the second plurality of peripheral strips 52 are formed alternately in the conveying direction R1. That is, a peripheral strip 51 of the first plurality of peripheral strips 51 is arranged at one edge portion of the coated substrate foil 11 at a first position in the length extension of the coated substrate foil 11. At the opposite edge portion at the first position in the length extension of the coated substrate foil 11, a second clearance 54 is arranged between two peripheral strips 52 of the second plurality of peripheral strips 52.

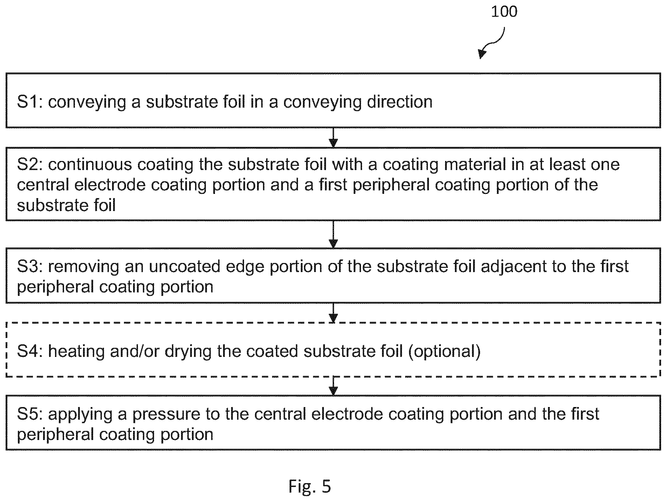

Fig. 5 shows a flowchart of a method 100 of manufacturing an electrode foil 30 according to a fifth example of the disclosure. The method 100 comprises a step S1 of conveying a substrate foil in a conveying direction and a step S2 of continuous coating the substrate foil with a coating material in at least one central electrode coating portion and a first peripheral coating portion of the substrate foil.

The method 100 further comprises a step S3 of removing an uncoated edge portion of the substrate foil adjacent to the first peripheral coating portion.

After removing the uncoated edge portion of the substrate foil, the method 100 further comprises an optional step S4 of heating and/or drying the coated substrate foil.

The method further comprises a step S5 of applying a pressure to the central electrode coating portion and the first peripheral coating portion. Optionally, the method may comprise further steps, such as anyone of steps S6 to S13 of fig. 1.

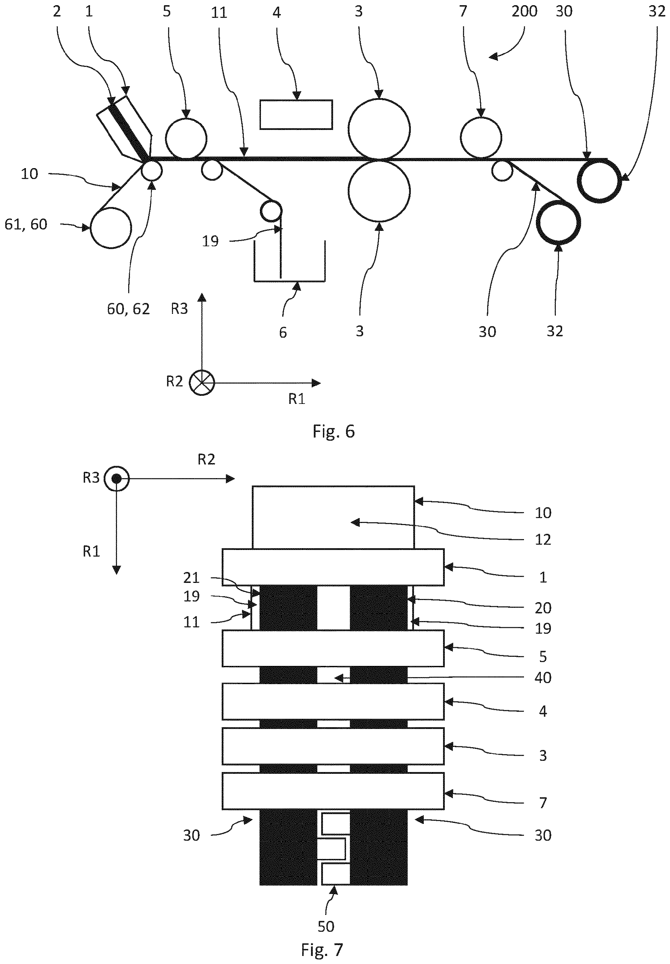

Fig. 6 shows an apparatus 200 for manufacturing an electrode foil 30 according to a sixth example of the disclosure in a schematic side view. The sixth example may be based on or correspond to the fifth example.

The apparatus 200 comprises a cutting device 5 for removing the uncoated edge portion 19 of the substrate foil 10, wherein the cutting device 5 is arranged after the coating device 1 in the conveying direction R1.

After removing the uncoated edge portion 19, the uncoated edge portion 19 is conveyed separately from the coated substrate foil 11 into a collecting device 6. The collecting device 6 may be a bin or a metal container. The collected, uncoated edge portion 19 may be recycled or processed in a way, other than in electrode foil manufacturing.

The apparatus 200 further comprises a drying device 4, wherein the drying device 4 is an induction heating device for heating the first coating surface 12 of the substrate foil 10. After removing the uncoated edge portion 19, the remaining coated substrate foil 11 is dried by the drying device 4.

The apparatus 200 further comprises a pressure application device 3 for applying pressure to the coated substrate foil 11. The pressure application device 3 is a calendaring device comprising two calendaring rollers. The pressure application device 3 is arranged after the cutting device 5 in the conveying direction R1. The apparatus further comprises a tap cutting device 7 for cutting the first uncoated portion 40 of the substrate foil 10, such that uncoated strips 50 for both the central electrode coating portion 20 and the first peripheral coating portion 21 are formed. After cutting the first uncoated portion 40, the central electrode coating portion 20 and the first peripheral coating portion 21 are separated from each other each forming an electrode foil 30. The two electrode foils 30 are conveyed separately from each other and winded up into two separate electrode coils 32.

Fig. 7 shows a part of the apparatus 200 for manufacturing an electrode foil 30 according to the sixth example of the disclosure in a schematic top view. Particularly, Fig. 7 shows the substrate foil 10 being conveyed through the coating device 1, the cutting device 5, the drying device 4, the pressure application device 3 and the tab cutting device 7 of the apparatus 200 according to the sixth example of the disclosure in a schematic top view.

The substrate foil 10 is conveyed in the conveying direction R1 and coated in a central electrode coating portion 20 and a first peripheral coating portion 21 by the coating device 1. The central electrode coating portion 20 and the first peripheral coating portion 21 are separated by a first uncoated portion 40 of the substrate foil 10. The first uncoated portion 40 of the substrate foil 10 is arranged substantially in the center of the substrate foil 10 in width direction R2.

The cutting device 5 is configured to remove an uncoated edge portion 19 adjacent to the central electrode coating portion 20 and an uncoated edge portion 19 adjacent to the first peripheral coating portion 21.

After removing the uncoated edge portions 19 by the cutting device 5 and after applying a pressure to the central electrode coating portion 20 and the first peripheral coating portion 21 by the pressure application device 3, the coated substrate foil 11 is conveyed further to the tab cutting device 7 in conveying direction R1.

The first uncoated portion 40 is alternately cut, such that uncoated strips 50 for both the central electrode coating portion 20 and the first peripheral coating portion 21 are formed. The uncoated strips 50 extend from the central electrode coating portion 20 in width direction R2 to the first peripheral coating portion 21 and from the first peripheral coating portion 21 in width direction R2 to the electrode coating portion 20 of the substrate foil 10. The uncoated strips 50 are formed alternating between the central electrode coating portion 20 and the first peripheral coating portion 21 in conveying direction R1. That is, an uncoated strip 50 for the electrode coating portion 20 is followed by an uncoated strip 50 for the first peripheral coating portion 21, which is subsequently followed by an uncoated strip 50 for the electrode coating portion 20 in conveying direction R1.

### LIST OF REFERENCE NUMERALS

- 1: coating device
- 2: coating material
- 3: pressure application device
- 4: drying device
- 5: cutting device
- 6: collecting device
- 7: tap cutting device
- 10: substrate foil
- 11: coated substrate foil
- 12: first coating surface (of the substrate foil)
- 13: first peripheral uncoated portion
- 14: second peripheral uncoated portion
- 15: third peripheral uncoated portion
- 16: fourth peripheral uncoated portion
- 17: fifth peripheral uncoated portion
- 18: sixth peripheral uncoated portion
- 19: uncoated edge portion
- 20: electrode coating portion
- 21: first peripheral coating portion
- 22: second peripheral coating portion
- 23: third peripheral coating portion
- 24: fourth peripheral coating portion
- 25: fifth peripheral coating portion
- 26: sixth peripheral coating portion
- 30: electrode foil
- 31: first sacrificial coating strip
- 32: electrode coil
- 40: first uncoated portion
- 50: uncoated strip
- 51: peripheral strip (of the first plurality of peripheral strips)
- 52: peripheral strip (of the second plurality of peripheral strips)
- 53: first clearance
- 54: second clearance
- 60: conveying system
- 61: first roller
- 62: second roller
- 100: method of manufacturing an electrode foil
- 200: apparatus for manufacturing an electrode foil

- R1: conveying direction
- R2: width direction
- R3: thickness direction

## Claims

1. A method of manufacturing an electrode foil, the method comprising:
- conveying a substrate foil in a conveying direction,
- continuous coating the substrate foil with a coating material in at least one central electrode coating portion and a first peripheral coating portion of the substrate foil,
- wherein a thickness of the coated first peripheral coating portion is similar to or larger than a thickness of the coated central electrode coating portion,
- wherein a width of the central electrode coating portion is larger than a width of the first peripheral coating portion,
- applying a pressure to the central electrode coating portion and the first peripheral coating portion, and
- removing the first peripheral coating portion at least partially.

2. Method according to claim 1, the method further comprising:
- continuous coating the substrate foil with a coating material in a second peripheral coating portion of the substrate foil,
- wherein a thickness of the coated second peripheral coating portion is similar to or larger than the thickness of the coated central electrode coating portion,
- wherein the width of the central electrode coating portion is larger than a width of the second peripheral coating portion,
- applying a pressure to the second peripheral coating portion, and
- removing the second peripheral coating portion at least partially.

3. Method according to one of the preceding claims, the method comprising:
- continuous coating the substrate foil with a coating material in a third peripheral coating portion of the substrate foil,
- wherein a thickness of the coated third peripheral coating portion is similar to or larger than the thickness of the coated central electrode coating portion,
- wherein the width of the central electrode coating portion is larger than a width of the third coating portion,
- wherein the third peripheral coating portion is arranged adjacent to the first peripheral coating portion, such that the first peripheral coating portion is arranged between the central electrode coating portion and the third peripheral coating portion,
- applying a pressure to the third peripheral coating portion, and
- removing the third peripheral coating portion at least partially.

4. Method according to one of the preceding claims, after coating the substrate foil with a coating material and before applying a pressure, the method comprising heating and/or drying the coated substrate foil.

5. Method according to one of the preceding claims, wherein applying a pressure comprises calendaring the coated substrate foil.

6. Method according to one of the preceding claims, wherein the central electrode coating portion and the first, second and/or third peripheral coating portion are arranged at a first coating surface of the substrate foil.

7. Method according to one of the preceding claims, wherein the central electrode coating portion and the first peripheral coating portion are distanced from each other in a width direction, wherein a distance between the central electrode coating portion and the first peripheral coating portion is smaller than or equal to 5 mm, more in particular 2 mm.

8. Method according to one of the preceding claims, wherein the width of the first peripheral coating portion is smaller than or equal to 3 cm.

9. Method according to one of the preceding claims, wherein the central electrode coating portion and the first peripheral coating portion are coated with the same coating material.

10. Method according to one of the claims 2 to 9, wherein the first peripheral coating portion and the second peripheral coating portion are arranged adjacent to the central electrode coating portion, such that the central electrode coating portion is arranged between the first peripheral coating portion and the second peripheral coating portion.

11. Method according to one of the preceding claims, wherein the first, second and/or third peripheral coating portion form a first, second and/or third sacrificial coating strip.

12. Method according to one of the preceding claims, after removing the first peripheral coating portion at least partially, the method further comprising:
- further processing the coated substrate foil, wherein the further processing comprises at least one of:
- slitting the coated substrate foil being a parent substrate foil into narrower child substrate foils,
- winding the coated substrate foil to a coil, particularly winding the child substrate foils into child coils
- drying, particularly vacuum drying, the coated substrate foil, particularly the child substrate foils,
- separating the coated substrate foil into electrode sheets,
- stacking the electrode sheets,
- welding electrode tabs,
- packaging electrodes into cell housings, and/or
- filling electrolytes into cell housings.

13. Method according to one of the preceding claims, wherein
- a distance between the first peripheral coating portion and an outer edge of the substrate foil in a width direction is smaller than or equal to 5 mm, in particular 2 mm.

14. A method of manufacturing an electrode foil, the method comprising:
- conveying a substrate foil in a conveying direction,
- continuous coating the substrate foil with a coating material in at least one central electrode coating portion and a first peripheral coating portion of the substrate foil,
- wherein a thickness of the coated first peripheral coating portion is similar to or larger than a thickness of the coated central electrode coating portion,
- removing an uncoated edge portion of the substrate foil adjacent to the first peripheral coating portion,
- wherein a width of the central electrode coating portion is similar to a width of the first peripheral coating portion, after the uncoated edge portion has been removed,
- applying a pressure to the central electrode coating portion and the first peripheral coating portion,
- wherein the central electrode coating portion and the first peripheral coating portion are separated by a first uncoated portion of the substrate foil, and
- wherein the first uncoated portion serves for providing tabs for both the first peripheral coating portion and the central electrode coating portion.

15. An apparatus for manufacturing an electrode foil, comprising:
- a conveyor system for conveying a substrate foil in a conveying direction,
- a coating device for coating coating material on the substrate foil in at least one central electrode coating portion and in at least one first peripheral coating portion of the substrate foil,
- a pressure application device for applying pressure to the coated substrate foil, and
- a cutting device for removing the first peripheral coating portion of the substrate foil at least partially.
